Europäisches Patentamt

European Patent Office

Office européen des brevets

(19)

(11) Publication number: **0 081 588**
**B1**

(12) **EUROPEAN PATENT SPECIFICATION**

(45) Date of publication of patent specification: 24.08.88

(51) Int. Cl.⁴: **G 05 B 19/403**

(21) Application number: **82901532.0**

(22) Date of filing: **20.05.82**

(86) International application number:
**PCT/JP82/00183**

(87) International publication number:
**WO 82/04139 25.11.82 Gazette 82/28**

(54) A numerical control system.

(30) Priority: **20.05.81 JP 76151/81**

(43) Date of publication of application:
**22.06.83 Bulletin 83/25**

(45) Publication of the grant of the patent:
**24.08.88 Bulletin 88/34**

(84) Designated Contracting States:
**DE FR GB**

(56) References cited:
**DE-A-2 743 492**
**FR-A-2 407 524**
**GB-A-2 038 035**
**JP-A-51 089 985**
**JP-A-51 110 182**
**JP-A-56 031 103**

**"ELECTRONICS", Vol. 53, No. 4, February 14,
1980, Pages 166 to 170,: "Interrupts call the
shot in scheme using two microprocessors"**

(73) Proprietor: **FANUC LTD**
**3580, Shibokusa Aza-Komanba Oshino-mura
Minamitsuru-gun Yamanashi 401-05 (JP)**

(72) Inventor: **IKEDA, Yoshiaki**
**2308-1, Kobiki-cho Hachioji-shi
Tokyo 193 (JP)**

(74) Representative: **Billington, Lawrence Emlyn
et al
HASELTINE LAKE & CO Hazlitt House 28
Southampton Buildings Chancery Lane
London WC2A 1AT (GB)**

EP 0 081 588 B1

Courier Press, Leamington Spa, England.

## Description

A Numerical Control System

Conventional sequence controllers, previously constructed of individual items of hardware such as relay circuits, are now being replaced by sequence controllers of the programmable type fashioned around a processor.

A sequence controller is operable to control a system by executing prescribed sequence processing in response to directions from a main control unit, the latter also employiong a processor. For example, e.g., a machine tool or a robot, a sequence controller of the type having an internal numerical control device (referred to as an NC hereinafter) has been developed in which both an NC and a sequence controller are provided with a processor and integrated into one unit. In a system of this kind, the sequence controller has a memory for storing a sequence program for the execution of sequence processing in accordance with M, S and Y function instructions transmitted by the NC, and is adapted to execute prescribed sequence processing upon receiving these M, S and T function instructions transferred from the NC side. The system employs a so-called repetitive operation method wherein the receipt of transferred data and the execution of sequence processing are carried out in repeated fashion.

If processing could be executed without the sequence controller's own built-in processor and the processor on the NC side being aware of each other in the sequence controller of the above-described type, then it would be possible to lighten the burden of each processor and exploit them more effectively. On the other hand, once the sequence controller has started executing sequence processing, halting such processing is undesirable. For this reason, a system has been considered wherein the completion of sequence processing on the sequence controller (referred to as SC hereinafter) side is communicated to the processor on the NC side, whereby data is then transferred from the processor on the NC side to the processor on the SC side so that the latter processor may resume sequence processing. This makes it necessary, however, for the processor on the NC side to monitor the completion of processing by the SC processor, thereby increasing the burden on the NC processor and impeding other processing. Another requirement is synchonrisation of the transferred data on the SC side.

According to the present invention, there is provided a numerical control system comprising a processor for executing numerical control, and a sequence controller wherein predetermined sequence processing may be executed by a built-in sequence processor in accordance with data transferred periodically from the main processor, characterized in that in operation a command signal will be generated for the sequence processor in dependence upon the main and sequence processors each time a transfer of data from the main processor to the sequence processor is completed, and upon the condition that a sequence of said sequence processor is completed also, on the basis of which command signal said built-in sequence processor will resume predetermined sequence processing.

An embodiment of the present invention may provide a numerical control system wherein, in the transfer of data from the NC processor to the processor built in the sequence controller, processing is executed without the two processors being aware of each other, enabling each processor to be utilised effectively.

Data may be transferred from the processor on the NC side at a predetermined period that is decided in advance by the expected sequence cycle, so that the NC processor is capable of transferring data without being affected by any variance in the cycle of the processor built in the sequence controller. Moreover, the minimum width of input signals may be decided solely by said predetermined period. Furthermore, the command signal is generated at the end of sequence processing upon completion of data transfer, whereby sequence processing is resumed by the processor built in the sequence controller. The built-in processor therefore does not require input signal synchronization and can execute its own sequence processing without being affected at all by the data transfer from the abovementioned processor. Immediately upon the completion of sequence processing, moreover, processing can be resumed in response to the externally applied command signal, so that the processor on the SC side is down for a short time only.

Brief Description of the Drawings

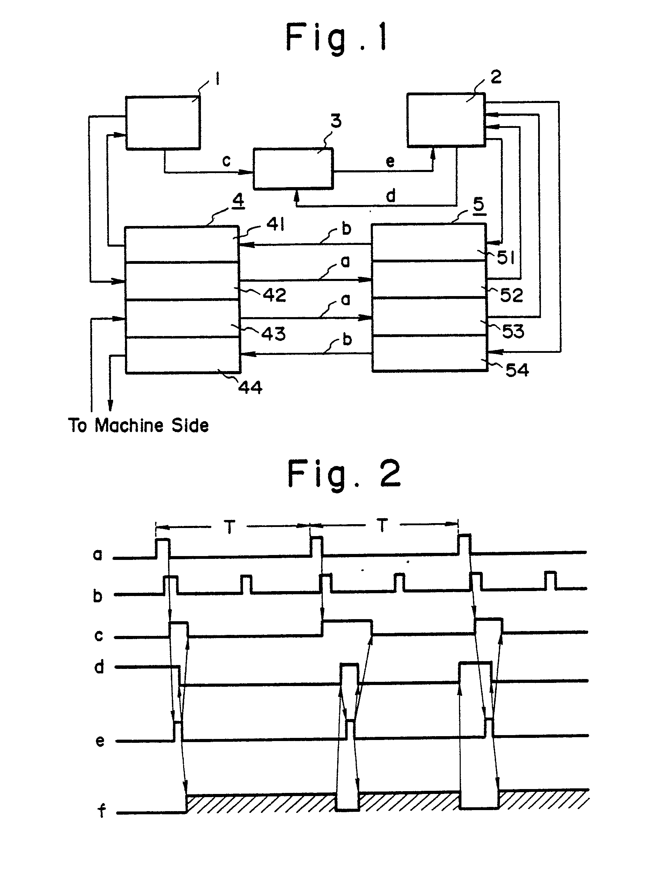

Fig. 1 is a block diagram embodying the present invention, and Fig. 2 is a timing chart associated with the block diagram of Fig. 1.

A preferred embodiment of the present invention will now be described in detail with reference to the drawings. In Fig. 1, numeral 1 denotes a processor belonging to an NC for executing numerical control based on a machining command input signal from, e.g., a paper tape or memory, not shown. The processor 1 transfers command data indicative of M, S and Y function instructions and the like to the sequence controller and receives process data transferred from the sequence controller. Numeral 2 denotes a processor on the sequence controller (SC) side for executing sequence processing based on the command data from the NC processor 1, and for delivering the result of sequence processing to a machine. The execution of sequence processing is uninterrupted until the end of one cycle. Upon receiving an input signal from the machine side, the processor 2 executes predetermined processing and delivers the result to the NC. The time required for sequence processing (the processing time for one cycle) is subject to variance depending upon the input signal and sequence command, and therefore is not constant. The processors 1 and 2 are constituted by microprocessors.

Numberal 3 denotes a command signal generating circuit the function whereof will be described later.

Numeral 4 denotes a buffer on the NC side. The buffer has four areas, namely an NC side input area 41 for receiving data from a buffer (described later) on the SC side, and for transmitting this data to the processor 1 on the NC side, an NC side output area 42 for transmitting, to the buffer on the SC side, data received from the NC processor 1, a machine side input area 43 for transmitting an input signal from the machine side to the buffer on the SC side, and a machine side output area 44 for transmitting data from the SC buffer to the machine side.

Numeral 5 denotes the buffer on the SC side. The buffer 5 likewise has four areas, namely a first SC side output area 51 for transmitting data from the processor 2 to the NC side input area 41, a first SC side input area 52 for transmitting data from the NC side output area 42 to the processor 2, a second SC side input area 53 for transmitting a signal from the machine side input area 43 to the processor 2, and a second SC side output area 54 for transmitting data from the processor 2 to the machine side output area 44.

The operation and effects of the illustrated embodiment of the invention will now be described.

First, we shall assume that command data from the processor 1 is loaded in the area 42 of buffer 4 and then transferred from area 42 of buffer 4 to area 52 of buffer 5, and that the processor 2 reads the data out of area 52 of buffer 5 to execute sequence processing. Similarly, we shall assume that an input signal from the machine side is loaded in the area 43 of buffer 4 and then transferred from area 43 of buffer 4 to area 53 of buffer 5, and that the processor 2 reads the signal out of area 53 of buffer 6 to execute sequence processing. We shall also assume that, conversely, data from the processor 2 to the NC side and to the machine side are loaded in areas 51, 54 of buffer 5 and then transferred from areas 51, 54 of buffer 5 to aras 41, 44 of buffer 4, that processor 1 reads the data out of area 41, and that the data in area 44 is transmitted to the machine side.

Next, continuing the description with reference to Fig. 2, assume that the period for a transfer from processor 1 to processor 2 is a constant period T, as shown at $a$. In other words, data is transferred from buffer 4 to buffer 5 at regular intervals equivalent to the period T.

Here the transfer period T is assumed to be equivalent to one cycle of sequence processing executed by the sequence controller. In a case where this processing cycle is subject to variance, as mentioned above, we shall assume that the length of the cycle, inclusive of variance, is somewhat greater than the mean time thereof.

Since it suffices for the processor 1 to execute a transfer at the period T, the burden on the processor is very light. Moreover, sequence processing executed by the sequence controller is completely unaffected.

Meanwhile, the period for the transfer of data from processor 2 to processor 1 is as indicated at $b$. This period is shorter than the transfer period T and is decided by the specifications of the sequence.

The processor 1, with the completion of data transfer, delivers a transfer end signal $c$ to the command signal generating circuit 3. The processor 2, upon completing the current cycle of sequence processing, sends a cycle and signal $d$ to the command signal generating circuit 3. In Fig. 2, the end of the cycle is indicated when the signal assumes the high logic level.

When the transfer end signal $c$ and cycle end signal $d$ are both high, the command signal generating circuit 3 generates a command signal $e$. The command signal $e$ is transmitted to the processor 2, in response to which the processor 2 returns to the beginning of the sequence to resume the predetermined sequence processing.

In Fig. 2, $f$ represents the sequence cycle in the operational state. It will be seen that the cycle end signal $d$ is not produced in cases where the sequence cycle is prolonged beyond the period T, so that the command signal is not generated. The command signal is generated at such time that the cycle end signal is produced at the end of the cycle. Thus, the generation of the command signal is delayed until the cycle is completed.

The simplest construction for the command signal generating circuit 3 is an AND circuit. Also, by providing the circuit with flip-flops or the like and arranging it so that trigger signals are received from the processors 1 and 2, the transfer end and cycle end signals can be reset internally of the circuit itself. It is also possible for the particular arrangement to be modified in various ways as required.

Accordingly, the processor 2 does not especially require synchronization of the input signals, and sequence processing may be executed without disturbance.

According to the present invention as described above, data is transferred from the processor 1 at a predetermined period decided beforehand by the expected sequencing cycle. The processor 1 can therefore perform the data transfer without being affected at all by any variance in the cycle of the processor built in the sequence controller. The minimum width of input signals, moreover, is decided solely by the period T. Furthermore, according to the invention, the command signal $e$ is generated at the end of sequence processing upon completion of data transfer, whereby sequence processing is resumed by the processor built in the sequence controller. The built-in processor therefore does not require input signal synchronization and can execute its own seqeunce processing without being affected at all by the data transfer from the abovementioned processor. Immediately upon the completion of sequence processing, moreover, processing can be resumed in response to the externally applied command signal. This has an important practical result in that the processor 2 is down for a short time only.

While the present invention has been described with reference to a single embodiment, it will be understood that the various modifications may be made in accordance with the gist of the invention and that all such modifications fall within the scope of the invention.

The sequence controller according to the present invention is well-suited for use in transmitting data from a numerical control device for controlling, e.g., a machine tool or robot, to a processor built in the sequence controller.

**Claims**

1. A numerical control system comprising a main processor (1) for executing numerical control, and a sequence controller wherein predetermined sequence processing may be executed by a built-in sequence processor (2) in accordance with data transferred periodically from the main processor (1), characterized in that in operation a command signal (e) will be generated for the sequence processor (2) in dependence upon the main and sequence processors (1, 2) each time a transfer of data from the main processor (1) to the sequence processor (2) is completed, and upon the condition that a sequence of said sequence processor (2) is completed also, on the basis of which command signal (e) said built-in sequence processor (2) will resume predetermined sequence processing.

2. A numerical control system according to claim 1, characterised in that said command signal (e) will be generated in response to a transfer end signal (c) from said main processor (1) and a cycle end signal (d) from said built-in sequence processor (2).

3. A numerical control system according to claim 2, characterised by a command signal generating circuit (3) coupled to the main and sequence processors (1, 2) to receive said transfer end signal (c) and said cycle end signal (d) therefrom, and to supply the command signal (e) to the sequence processor (2).

4. A numberical control system according to claim 3, characterized in that the command signal generating circuit (3) is an AND circuit.

**Patentansprüche**

1. Numerische Steuerung, mit einem Hauptprozessor (1) zum Ausführen einer numerischen Steuerung und einer Programmsteuerungseinrichtung, in der eine vorbestimmte Programmverarbeitung durch einen eingebauten Programmsteuerungsprozessor (2) in Übereinstimmung mit Daten ausgeführt werden kann, die periodisch von dem Hauptprozessor (1) übertragen werden, dadurch gekennzeichnet, daß im Betrieb ein Befehlssignal (e) für den Programmsteuerungsprozessor (2) in Abhängigkeit von dem Haupt- und dem Programmsteuerungsprozessor (1, 2) jedesmal dann, wenn eine Übertragung von Daten von dem Hauptprozessor (1) zu dem Programmsteuerungsprozessor (2) abgeschlossen ist, und von der Bedingung, daß eine Programmfolge des Programmsteuerungsprozessors (2) ebenfalls abgeschlossen ist, erzeugt wird, wobei der eingebaute Programmsteuerungsprozessor (2) eine vorbestimmte Programmverarteitung auf der Grundlage des Befehlssignals (e) wiederuafnimmt.

2. Numerische Steuerung nach Anspruch 1, dadurch gekennzeichnet, daß das Befehlssignal (e) in Reaktion auf ein Übertragungsendesignal (c) aus dem Hauptprozessor (1) und ein Zyklusendesignal (d) aus dem eingebauten Programmsteuerungsprozessor (2) erzeugt wird.

3. Numerische Steuerung nach Anspruch 2, gekennzeichnet durch eine Befehlssignal-Erzeugungsschaltung (3), die mit dem Haupt- und dem Programmsteuerungsprozessor (1, 2) verbunden ist, un das Übertragungsendesiginal (c) und das Zyklusendesignal (d) daraus zu empfangen und um das Befehlssignal (e) an den Programmsteuerungsprozessor (2) auszugeben.

4. Numerische Steuerung nach Anspruch 3, dadurch gekennzeichnet, daß die Befrehlssignal-Erzeugungsschaltung (3) eine UND-Schaltung ist.

**Revendications**

1. Un système de commande numérique comprenant un processeur principal (1) pour exécuter une commande numérique, et un contrôleur séquential dans lequel un traitement séquential prédéterminé peut être exécuté par un processeur séquentiel incorporé (2) selon des données transférées périodiquement depuis le processeur principal (1), caractérisé en ce qu'en fonctionnement, un signal de commande (e) sera généré pour le processeur séquentiel (2) en fonction des processeure principal et séquentiel (1, 2) à chaque fois qu'on transfert de données du processeur principal (1) au processeur séquentiel (2) est termine, et à la condition qu'une séquence dudit processeur séquentiel (2) soit aussi terminée, et en ce qu'à partir dudit signal de commande (e), ledit processeur séquentiel incorporé (2) reprend le traitement séquentiel prédéterminé.

2. Un système de commande numérique selon la revendication 1, caractérisé en ce que ledit signal de commande (e) sera généré en réponse à un signal de fin de transfert (c) venant dudit processeur principal (1) et à un signal de fin de cycle (d) venant dudit processeur séquentiel incorporé (2).

3. Un système de commande numérique selon la revendication 2, caractérisé par un circuit générateur du signal de commande (3) couplé aux processeurs principal et séquential (1, 2) pour recevoir ledit signal de fin de transfert (c) et ledit signal de fin de cycle (d) de ces derniers, et fournir le signal de commande (e) au processeur séquentiel (2).

4. Un système de commande numérique selon la revendication 3, caractérisé en ce que le circuit générateur du signal de commande (3) est un circuit ET.

# Fig.1

To Machine Side

# Fig. 2